(19) Europäisches Patentamt / European Patent Office / Office européen des brevets

(11) **EP 4 006 669 B1**

(12) **EUROPEAN PATENT SPECIFICATION**

(45) Date of publication and mention
of the grant of the patent:
**02.08.2023 Bulletin 2023/31**

(21) Application number: **20210780.1**

(22) Date of filing: **30.11.2020**

(51) International Patent Classification (IPC):
**G05B 19/418** $^{(2006.01)}$

(52) Cooperative Patent Classification (CPC):
**G05B 19/41875;** Y02P 90/02

(54) **AUTOMATED SYSTEM FOR QUALITY CONTROL MANAGEMENT IN A CONTAINER PROCESSING PLANT**

AUTOMATISIERTES SYSTEM ZUR STEUERUNG DER QUALITÄTSKONTROLLE IN EINER BEHÄLTERBEARBEITUNGSANLAGE

SYSTÈME AUTOMATISÉ DE GESTION DE CONTRÔLE QUALITÉ DANS UNE INSTALLATION DE TRAITEMENT DE RÉCIPIENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2022 Bulletin 2022/22**

(73) Proprietor: **Sidel Participations**
**76930 Octeville-sur-Mer (FR)**

(72) Inventors:
• **BORGESE, Rossana**
  **43126 Parma (IT)**
• **CENCI, Mattia**
  **43126 Parma (IT)**
• **MORANDIN, Francesco**
  **43126 Parma (IT)**
• **MACCHERONI, Roberta**
  **43126 Parma (IT)**

(74) Representative: **Sidel Group**
**c/o Sidel Participations**
**Avenue de la Patrouille de France**
**76930 Octeville-sur-mer (FR)**

(56) References cited:
**WO-A1-2020/126441      GB-A- 2 179 648**
**US-A1- 2019 318 027**

• **ARTURO J FERNÃ NDEZ ET AL: "Optimal acceptance sampling plans for log-location scale lifetime models using average risks", COMPUTATIONAL STATISTICS AND DATA ANALYSIS, NORTH-HOLLAND, AMSTERDAM, NL, vol. 56, no. 3, 15 September 2011 (2011-09-15), pages 719-731, XP028334707, ISSN: 0167-9473, DOI: 10.1016/J.CSDA.2011.09.020 [retrieved on 2011-09-22]**
• **VELLAISAMY P ET AL: "A Unified Approach for Modeling and Designing Attribute Sampling Plans for Monitoring Dependent Production Processes", METHODOLOGY AND COMPUTING IN APPLIED PROBABILITY, KLUWER ACADEMIC PUBLISHERS, BO, vol. 7, no. 3, 1 September 2005 (2005-09-01), pages 307-323, XP019213638, ISSN: 1573-7713, DOI: 10.1007/S11009-005-4519-7**

**Description**

The present invention relates to an automated system for quality control management in a container processing plant.

In general, the present solution may be implemented in plants for processing any type of containers, such as bottles (or other kinds of containers) made of glass, plastic (PET), aluminium, steel and composite materials, that are to be filled with any type of pourable product, including sparkling liquids, such as sparkling water, non-alcoholic beverages and beer; non-effervescent liquids, such as natural water, juices, tea, integrators for sport activities and wine; and liquid detergents, emulsions, suspensions, or high-viscosity liquids.

The following disclosure will make particular reference, without this implying any loss of generality, to a plant for filling containers, like bottles, with a pourable liquid, in particular a food product.

As is known, a plant for filling containers comprises a number of processing machines arranged so as to form a container processing line, among which a forming machine, for example a blower, a filling machine, a capping machine, a labelling machine, a packaging machine, a sterilising machine, a palletizer, etc.

In a known manner, stringent hygienic requirements have to be met in plants for filling containers to ensure microbiological quality of the filled containers and of the liquid contained therein. For instance, suitable solutions are used to make one or more of the processing machines of the plant either totally or partially aseptic. In addition, a set of procedures may be implemented aimed at guaranteeing sterility by means of the so-called HACCP (Hazard Analysis and Critical Control Points) system. As is known, the HACCP system is based on monitoring, in the container processing machines, of critical points in which a danger of contamination, of a biological nature, as well as of a chemical or physical nature, may be expected, and its aim is to identify and analyse possible hazards and develop solutions suitable for their control.

Notwithstanding the above solutions, it is possible and it cannot be prevented for events to occur, which may have a negative impact on the microbiological quality of the products.

Therefore, it is a common practice, during production, to sample a number of containers and perform, e.g. in a laboratory, a number of analysis and microbiological tests on the sampled containers, in order to assess and control the production quality.

Currently, the number of samples that are acquired and analysed is determined by a production manager of the container processing line, based on the characteristics of the production. The container to be analysed are moreover sampled at regular, spatial and time, intervals along the container processing line.

Sampling and microbiological analysis of the containers allow to identify potential risks concerning the quality of the products and to actuate suitable corrective actions.

However, the present Applicant has realized that known solutions are not completely satisfactory, not being always reliable and thus able to guarantee a desired quality control and corresponding hygienic requirements in a container processing line.

WO2020126441 discloses a system for monitoring and controlling aseptic quality within a container processing machine. US2019318027 discloses a method and a system for the determination of a sampling size in a sampling plan.

The aim of the present disclosure is to provide a solution allowing to overcome the problems highlighted previously.

The solutions disclosed in the documents mentioned above does help the user in inputting the correct data in dependence of actual condition of the processing, as they require the user to rely completely on his knowledge.

Another aim of the present disclosure is also to provide a solution which can adapt more easily to different levels of expertise of the user.

According to the present disclosure a system and a method for quality control management in a container processing plant are provided, as defined in the appended claims.

For a better understanding of the present invention, preferred embodiments thereof are now described, purely by way of non-limiting example, with reference to the attached drawings, wherein:

- Figure 1 is a general block diagram of a plant for processing containers, wherein the system for quality control management according to the present solution is implemented;
- Figure 2 and Figures 3A-3B show plots depicting statistical quantities processed by the system for quality control management;
- Figure 4 is a schematic block diagram of a processing unit in the system for quality control management;
- Figures 5-6 schematically show exemplary operations of the system for quality control management;
- Figure 7 is a table relating to risk assessment in the system for quality control management; and
- Figures 8-9 show further examples of the operation of the system for quality control management.

The general goal of any production is to have as few defective items as possible; on the other hand, defective items may occur, hence it is required to select randomly some items to estimate the proportion of defective items produced and check the quality of the production.

As will be clarified hereinafter, an aspect of the present solution provides an automated system for quality control management in a container processing plant, whose aim is to determine an acceptance sampling plan to meet a desired quality level.

The automated system is configured, based on input data relating to features of the container processing line and a quality objective for the same container processing line, to automatically determine, using a statistical logic, a sampling plan of the containers aimed to achieve the desired quality objective.

As will be discussed in details, according to the invention the automated system is configured to determine and to provide at its output a sample size, i.e. a number of containers to be sampled and analysed, and moreover to provide an estimate of the microbiological quality of the production.

In particular, the automated system is configured to determine the acceptance sampling plan based on a threshold of unacceptable quality level (RQL - Rejectable Quality Level) and to provide an indication of an acceptable quality level (AQL), i.e. of an acceptable proportion of defective items.

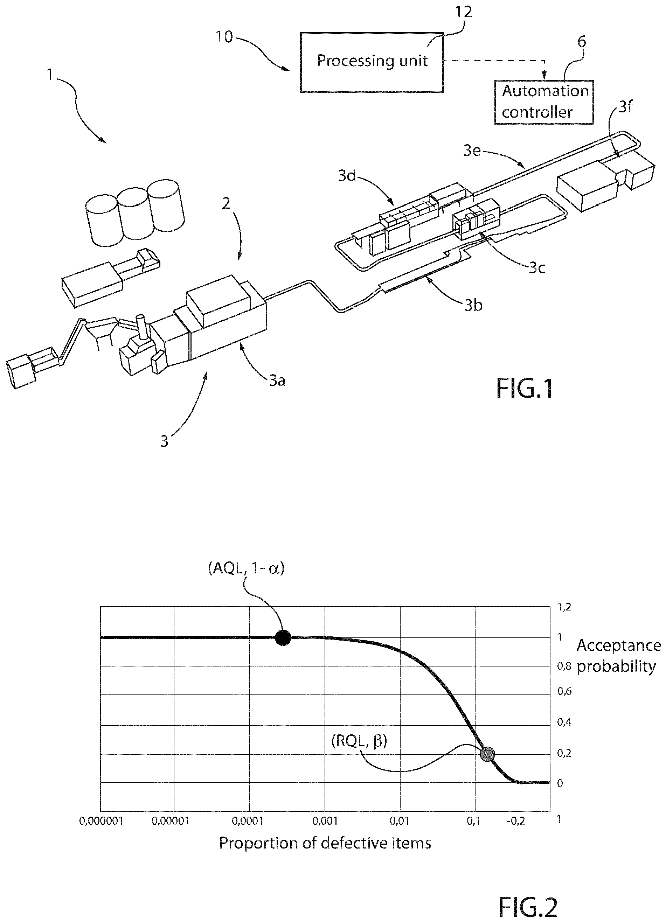

As illustrated schematically in Figure 1, a container processing plant, in the example a filling plant, designated as a whole by 1, includes a number of container processing machines 3 arranged along a container processing line 2. For example, the container processing machines 3 comprise, from the inlet to the outlet of the container processing line:

a combined forming, filling and capping machine 3a, receiving container preforms and providing filled and capped containers;
a first conveyor 3b, transporting the filled and capped containers received from the combined machine 3a;
a labelling machine 3c, applying labels to the containers received from the first conveyor 3b;
a packing machine 3d, encasing the labelled containers provided by the labelling machine 3c, in suitable packs;
a second conveyor 3e, transporting the pack of containers received from the packing machine 3d; and
a palletizing machine 3f, arranging the packs of containers in pallets, ready for stocking and transportation.

A microbiological laboratory is operatively coupled to one or more, preferably all, of the aforesaid container processing machines 3 of the container processing plant 1 and is configured to carry out microbiological analyses for evaluating the quality of the product, on the basis of sampling of containers being filled (or that are still to be filled or have already been filled), at sampling points along the container processing line. For instance, the aforesaid microbiological analyses may regard: the microbiological quality of the product or container; the microbiological defectiveness; organoleptic and nutritional information regarding the product; leakage or other defects of the containers; residual content of oxygen or other gases; etc.

The container processing plant 1 further comprises an automated system 10 for quality control management of the containers and the corresponding product, having a processing unit 12. The processing unit 12 may comprise any suitable computing unit, e.g. a processor, a microcontroller, or a similar digital-processing module, executing a set of software instructions stored in a nonvolatile memory; in a possible embodiment, the processing unit 12 may be implemented as a cloud processing platform, remotely accessible with any suitable hardware and software equipment.

The processing unit 12 may be operatively coupled (e.g. via any suitable wireless communication link) to an automation controller 6 of the container processing line 2, which is coupled to respective control units (here not shown) of the container processing machines 3; in a known manner, the automation controller 6 is configured to supervise general operation of the container processing machines 3 and to receive information about the operative status of the same container processing machines 3.

In an alternative embodiment, the same processing unit 12 may be included in the automation controller 6 of the container processing line 2, being a portion of the same automation controller 6.

According to a particular aspect of the present solution, the processing unit 12 of the automated system 10 is configured to determine an acceptance sampling plan for sampling along the line of the containers being filled (or that are still to be filled or have already been filled), in particular to determine a sample size, i.e. a number of items to be sampled, and provide a resulting quality level.

As will be discussed in details, the processing unit 12, based on input data relating to features of the container processing line (such as a recipe pH, either low or high acid, a speed and length of production) and a first quality level indication (in particular, an indication of a threshold of unacceptable quality level or, in other terms, of expected "power" of the quality control), is configured to determine and to provide at the output a sample size, related to the number of items to be sampled, based on criteria of statistical analysis. The processing unit 12 is also configured to provide at its output a second quality level indication, i.e. an indication of acceptable quality level to be expected from the container processing line.

In order to disclose the operation of the processing unit 12, some definitions and basic concepts are first provided regarding the statistical analysis criteria, on which the same operation is based.

"Item" is defined as any element that can be considered and described separately.

"Lot" is defined as a definite part of a population/production constituted under essentially the same conditions.

"Sublot" is defined as a subset of a lot (it can also be the lot itself) that is statistically analysed to be considered acceptable or rejectable.

"Inspection by Attributes" is an inspection based on verifying the presence or absence of one or more particular characteristics in each item under consideration and counting how many items do, or do not, possess the characteristics.

"Sample Unit" is an item being analysed.

"Sample" is a subset of a population made up of one or more sample units.

"Sample Size" is the number of sample units in a sample.

"Acceptance Sampling Plan" is a plan stating the sample size (e.g. the number of items to be selected randomly per hour) and the associated criteria for acceptance of each sublot. The analysis on a sample size gives an estimate of the proportion of defective items in the sublot under analysis (denoted by $p$). Fixed a proportion of defective items $p_0$, the analysis of the sample allows to choose between:

- $H_0$ hypothesis = $p \leq p_0$,
- $H_1$ hypothesis = $p > p_0$.

To establish whether a sublot is unacceptable or rejectable, a sample of N items is selected randomly to be tested to make an inference on the proportion p of defective items in the sublot. To design the test, an integer K is fixed: if the defective items in the sample are no more than K, the above $H_0$ hypothesis is accepted, otherwise the above $H_1$ hypothesis is accepted. As will be discussed below, K may be equal to zero.

"TYPE 1 error (False Positive)" is defined as the error that occurs when a good sublot is rejected; the probability to have a type 1 error is generally referred to as "Producer's risk", and it is denoted by $\alpha$.

"TYPE 2 error (False Negative)" is defined as the error that occurs when a bad sublot is accepted; the probability to have a type 2 error is generally referred to as "Consumer's risk" and it is denoted by $\beta$.

Two quality levels may be defined, providing an indication of the quality of the acceptance sampling plan (and consequently of the container production).

"Acceptable Quality Level (AQL)" is defined as the worst quality level that is still considered satisfactory; it is the worst proportion $p_0$ of defective items in $H_0$, or, in other words, it is the maximum percentage of defective items that can still be considered completely satisfactory. The probability of accepting a sublot with AQL defectives is at least $1-\alpha$ (it is therefore noted that the AQL level is associated with the type-1, or false positive, error probability $\alpha$). This means that if the sublot was actually rejected, there would be a probability $\alpha$ that the sublot should have been accepted, because there is a probability $\alpha$ that the actual defectiveness proportion of the sublot is actually less than AQL.

"Rejectable Quality Level (RQL)" is defined as the threshold of unacceptable quality level, corresponding to an unacceptable proportion of defective items in the analysed sublot. Substantially, beyond the RQL the analysed sublot should be rejected. The probability of accepting a sublot with RQL defectives is at most $\beta$ (it is therefore noted that the RQL level is associated with the type-2, or false negative, error probability $\beta$). This means that if the sublot was actually accepted, there would be a probability $\beta$ that the sublot should have been rejected, because there is a probability $\beta$ that the actual defectiveness proportion of the sublot is actually greater than RQL.

In particular, the "Power" of the sampling plan (and of the statistical test) is given by 100%-$\beta$, where $\beta$ is expressed as a percentage (or, in other words, as the value 1-$\beta$ expressed as a percentage).

The probability of accepting $H_0$ with sample size equal to N, given that the proportion of defective items is p, can be expressed by: P(number of defective items $\leq$ K).

In the present discussion it is assumed that K=0 (in other words, the $H_0$ hypothesis is accepted if and only if there are no defective items in the sample), hence the probability of accepting $H_0$ is:

$$P(\text{number of defective items} = 0): (1 - p)^N.$$

Figure 2 is a plot in logarithmic scale of the above relation between the proportion of defective items in the sublot under analysis and the associated acceptance probability (for a given sample size N), which is denoted as "Operating characteristic curve", i.e. the curve that displays the probability of acceptance of $H_0$ versus the proportion of defective items (no defective items meaning a 100% acceptance).

Any point (x, y) on the operating characteristic curve means that there is probability y of accepting a sublot with proportion of defective equal to x.

In particular, the points (AQL, 1-$\alpha$) and (RQL, $\beta$) belong to the operating characteristic curve (as shown in the same Figure 2):

$$1 - \alpha = (1 - AQL)^N \; ;$$

$$\beta = (1 - RQL)^N.$$

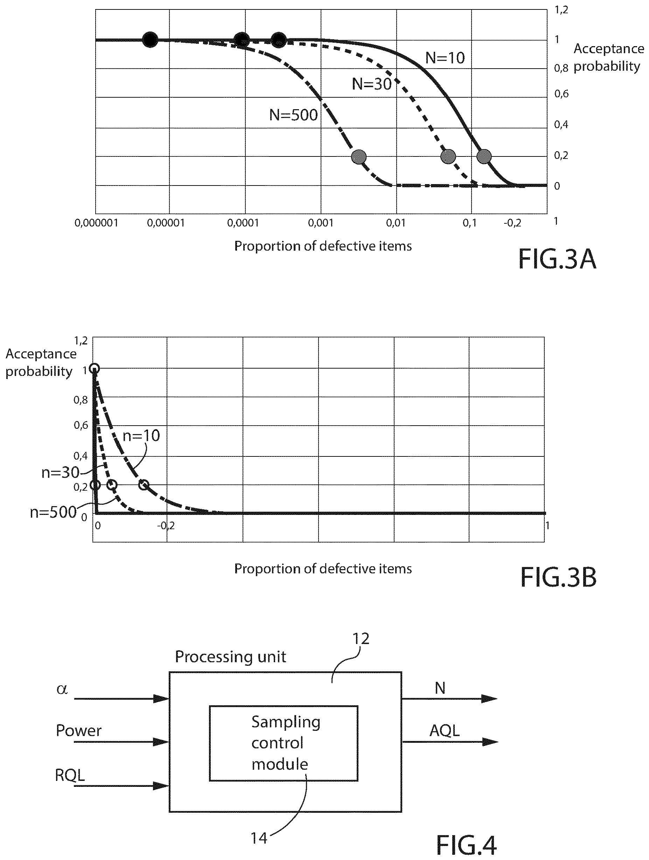

Figure 3A shows, again in logarithmic scale, three operating characteristic curves for different values of the sample size N (N=10; N=30 and N=500).

Figure 3B shows the same curves, not using the logarithmic scale. In particular, it is noted that the greater the sample size N is, the steeper the operating characteristic curve is, a steeper curve meaning a higher-quality or more powerful test.

The above discussed parameters N, AQL, $\alpha$, RQL and Power (i.e. 100%-$\beta$) are interconnected variables; in particular, it is possible to fix three of these variables to determine the values of the other two variables.

Moreover, the greater the power is, the lower the RQL is and vice-versa; the smaller the type-1 error probability $\alpha$ is, the lower the AQL is and vice-versa; the smaller RQL (and AQL) values give greater values for the sample size N, hence a better and more powerful test, more capable of discerning between $H_0$ and $H_1$, i.e. between good and bad sublots.

According to the invention, as schematically shown in Figure 4, the processing unit 12 of the automated system 10 comprises a sampling-control module 14, configured to manage the acceptance sampling plan for sampling of the containers along the processing line, determining the sample size N that allows to achieve the desired quality level.

According to the invention, the sampling-control module 14 is configured to consider, as input data, the following parameters: type-I error probability $\alpha$; Power (associated with the type-II error probability $\beta$, as discussed above); and RQL.

The sampling-control module 14 is further configured to determine and provide at the output the sample size N and AQL values, based on the above input data and the following expressions (derived from the operating characteristic curve) :

$$N = \log_{(1-RQL)}(1 - Power/100)$$

$$AQL = 1 - (1 - \alpha)^{1/N}$$

According to an aspect of the present solution, the sampling-control module 14 is configured to accept and consider a pre-set and fixed set of values (and combination thereof) for the above input data $\alpha$, Power, RQL, namely:

$\alpha$ = 2,5$\sigma$; 3$\sigma$; 4$\sigma$
Power = 70%; 80%; 90%; 95%
RQL = 0,05; 0,03; 0,01; 0,008

wherein k$\sigma$ denotes the probably of the Gaussian tails, P(Z<-k) + P(Z>k), with Z= Norm(0, 1) :

$$\alpha = 2,5\sigma \approx 0,0124; \quad (1- \alpha) \cdot 100 \approx 98,76\%$$

$$\alpha = 3\sigma \approx 0,0027; \quad (1- \alpha) \cdot 100 \approx 99,73\%$$

$$\alpha = 4\sigma \approx 0,000063; \quad (1- \alpha) \cdot 100 \approx 99,99\%.$$

These values have been specifically determined based on a trade-off between the need of assuring a proper statistical test for quality control and the need of preserving an efficiency and responsiveness of the microbiological laboratory for testing the sampled containers.

The sampling-control module 14 is thus configured to calculate the sample size N and the AQL values for any combination of input data (among the above set of values), to test the quality of a sublot.

In this regard, a sublot may be advantageously defined as a fixed number of hours of production, for example 10 hours of production; the sampling-control module 14 may therefore be configured to provide at the output the number of samples per hour.

It is noted that, in general, the condition of a processing machine is supposed not to change in a time interval of several (e.g. 10) hours; this definition for a sublot does not depend on the speed of the container processing machines, but the size of the sublot changes proportionally with the speed; this same definition allows to select randomly a same amount of containers per hour (this allowing a more accurate programming of the operation of the microbiological laboratory).

According to the invention, the sampling control module 14 is configured to receive, from an operator (e.g. a production manager of the container processing plant 2) or directly from the automation controller 6 of the container processing line 2, an information about a recipe pH (high or low acid) and an information about a desired setting for the sampling plan between a first (basic), second (advanced) or third (pro-advanced) setting (these settings representing a macro-assessment of the quality of the resulting production or power of the statistical analysis).

As will be discussed in more details, the recipe pH determines the sample size, a low acid product requiring a higher number of samples; and the setting for the sampling plan determines a power of the statistical test (the power increasing from the first, basic, to the third, pro-advanced, settings).

The sampling control module 14, according to the information received, is configured in this case to automatically determine a corresponding set of the input data $\alpha$, Power, RQL (chosen among the pre-set values), on which the subsequent calculation for the acceptance sampling plan is based; in other words, the operator (or automation controller 6) does not provide actual values for the input data, instead providing high-level information from which the same input data are determined (a knowledge of the statistical criteria based on which the sampling plan is determined is thus not required).

The sampling control module 14 is then configured to calculate the output data (sample size N and AQL values) based on the automatically determined set of the input data $\alpha$, Power, RQL, providing the same output data to the operator, or directly to the automation controller 6 in case of an automated implementation of the sampling plan.

The sampling control module 14 may also provide, as output data, the number of samples per hour (considering that a sublot is made of a certain number of hours, e.g. 10 hours).

It is noted that, in this case, the determination of the acceptance sampling plan is "transparent" to the operator (or automation controller), who is not required to have any specific statistical knowledge.

The sampling control module 14 may also receive as input data, further information about the container processing line 2, such as a length of production and a production speed. In this case, the same sampling control module 14 is configured to calculate and provide as output data, the total number of samples that are to be analysed, based on the number of sublots in the planned production.

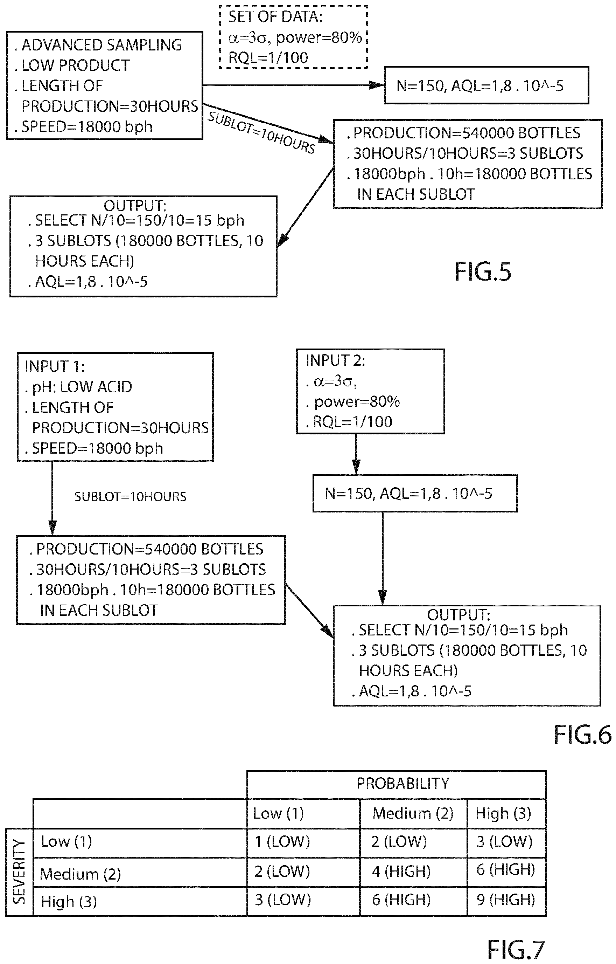

Figure 5 shows schematically an exemplary operation of the sampling control module 14, with possible input data and the resulting output data, in the case of input selection of an advanced sampling and a low acid product for filing of the containers (in the example, bottles). The sampling control module 14 receives at the input also the speed of production (in terms of bottles per hour, bph) and the length of the production (in terms of hours)

It is noted in particular that the set of input data $\alpha$, Power, RQL are in this case automatically determined (as schematically represented by the dashed box in the same Figure 5).

According to a different implementation, the sampling control module 14 is configured to receive at the input directly the values for the input data $\alpha$, Power and RQL, in addition to the information about the recipe pH, high or low acid. As discussed above, further information about the container processing line 2, such as a length of production (in hours) and a production speed, may also be received as part of the input data, e.g. again from the operator or directly from the automation controller 6 of the container processing line 2.

In this implementation, the sampling control module 14 may be configured to restrict the possible choice of values for the input data only between the pre-set and fixed set of values, namely:

- $\alpha$ chosen between 2,5$\sigma$; 3$\sigma$; 4$\sigma$
- power chosen between 70%; 80%; 90%; 95%
- RQL chosen between 0,05; 0,03; 0,01; 0,008.

Moreover, further restrictions may be imposed by the sampling control module 14, depending on the values of one or more of the input data; for example, at least one of the RQL values may not be allowed depending on the recipe pH (as an example, the RQL value 0,05 may not be allowed for low acid products).

In other words, the sampling control module 14 is configured to apply certain filters and limitations to the values of the input data, again based on the need of assuring a proper statistical test for quality control and the need of preserving the efficiency and responsiveness of the microbiological laboratory.

The sampling control module 14, based on the input data, is configured to calculate and provide at the output the following output data (it may be considered again a sublot of 10 hours):

- AQL;
- N (sample size, i.e. items to be selected in a sublot);

- N/10 (item to be selected per hour);
- number of sublots (i.e. length of production / 10);
- number of containers in a sublot (production speed . 10) .

Figure 6 schematically shows an exemplary operation of the sampling control module 14, with possible input data and the output data, in case of the above implementation. It is noted in particular that the set of input data $\alpha$, Power, RQL (denoted as "Input 2") are in this case directly provided by the operator (or by the automation controller 6) and not automatically determined by the sampling control module 14.

According to a further aspect of the present solution, since the sublot is defined as a fixed number of hours of production (in the discussed example, 10 hours of production), the sampling control module 14 is configured to specifically manage a last part of the production in case it does not correspond to an entire sublot.

In particular, in a first case, if it is less than half of the sublot (e.g. 5 hours of production), the last part of production is included in the last sublot (which therefore has an increased length); otherwise, in a second case, if the last part of production is more than half sublot, it is considered as a new sublot representing the last sublot of the production (which therefore has a decreased length).

In both cases, the sampling control module 14 is configured to select randomly a same number (N/10) of bottles per hour, without any modification, for every one of the sublots, independently from their actual length.

However, the AQL calculated by the sampling control module 14 for the last sublot will be lower (in case the sample size is higher, first case above) or higher (in case the sample size is lower, second case above) than the AQL calculated for the previous sublots having a standard length.

Moreover, if the total production is smaller than a sublot, the whole duration of the production may be considered as a sublot.

Also in this case, the same number of bottles per hour (N/10) is selected randomly; and the AQL has to be recalculated by the sampling control module 14, having a higher value, due to the resulting sample size being lower than expected.

The sampling control module 14 is further configured to manage a stop of production before the scheduled time (in general, as previously discussed, the sampling plan is based on sublots, hence producing a different number of complete sublots does not change the quality of the statistical sampling).

In particular, if the production stops before the end of a sublot, the part of the same sublot can be included in the previous sublot; if the production stops before the end of the first sublot, the part of the first sublot can be considered as a sublot.

The sampling control module 14 therefore is able to manage quality control of the production, also if it is shorter than the scheduled production, or if it is not possible to know the length of the production in advance (case in which the operator has to estimate the length of the production, which may later not correspond to the actual production).

As previously discussed, the sampling control module 14 is configured to determine the random selection of the same number of samples per hour and to suitably recalculate the AQL value (having a higher value due to the sample size being lower, or a lower value due to the sample size being higher).

It is noted that the above discussed aspects of the present solution are aimed at guaranteeing the efficiency and responsiveness of the microbiological laboratory, while also preserving the reliability of the statistical test.

According to a further aspect of the present solution, the sampling control module 14 of the processing unit 12 is further configured to address unexpected events that may increase the risk of contamination and may occur during the production.

In particular, the sampling control module 14 is configured to increase the power of the statistical test, thus determining a larger sample to be analysed, whenever an event occurs that may negatively impact on the microbiological quality of the products.

The "Power" value in the input data is therefore suitably increased, either just for the sublot immediately after the event or for all the sublots till the end of the production, depending on the nature of the event and the way the event can impact on the quality. Consequently, the sample size N is recalculated by the sampling control module 14, with an additional group of samples, given by the difference between the new sample size (not rounded) and the old one, being required to be randomly selected.

In particular, the increased value is a function of a risk of contamination associated to the event that has occurred, according to a logic that associates each event to a corresponding risk of contamination.

According to a possible embodiment, each event is classified by a "severity" of contamination it may cause (e.g. low, medium or high) and its "probability" (e.g. again low, medium or high).

With a risk assessment table, e.g. as shown in Figure 7, it is possible to quantify the risk for each event as the product of the above two parameters:

$$risk = severity \cdot probability.$$

For example, the sampling control module 14 may add 2% for low risk events and 3% for high risk events to the value of the "Power" initially received or set as the input of the calculation, and then proceed to recalculation of the sample size N and of the AQL value.

It is clear that other and/or further levels of severity and probability may be evaluated, e.g. a medium risk, as well as different increase values may be implemented by the sampling control module 14.

In a possible embodiment of the automated system 10, the processing unit 12 may further include a risk detection and assessment module, configured to detect (e.g. via suitable sensors coupled to the container processing line 2) the events that may negatively impact on the microbiological quality of the products; and to assess the risk associated to the same events, as discussed above.

The risk detection and assessment module may be operatively coupled to the sampling control module 14, to communicate the event detection and the associated risk, in response to the communication the same sampling control module 14 increasing the power of the statistical test and recalculating the sample size N and AQL values.

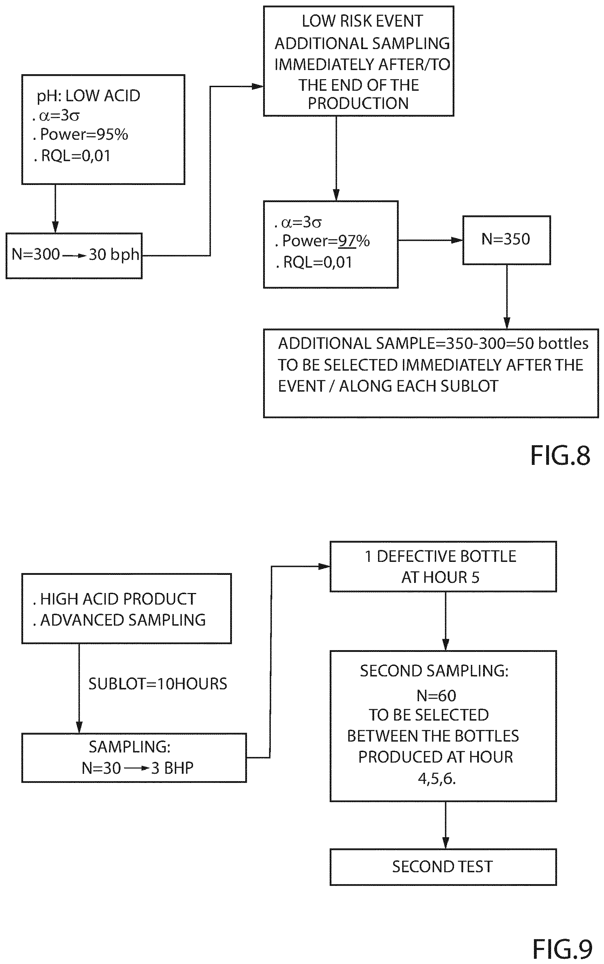

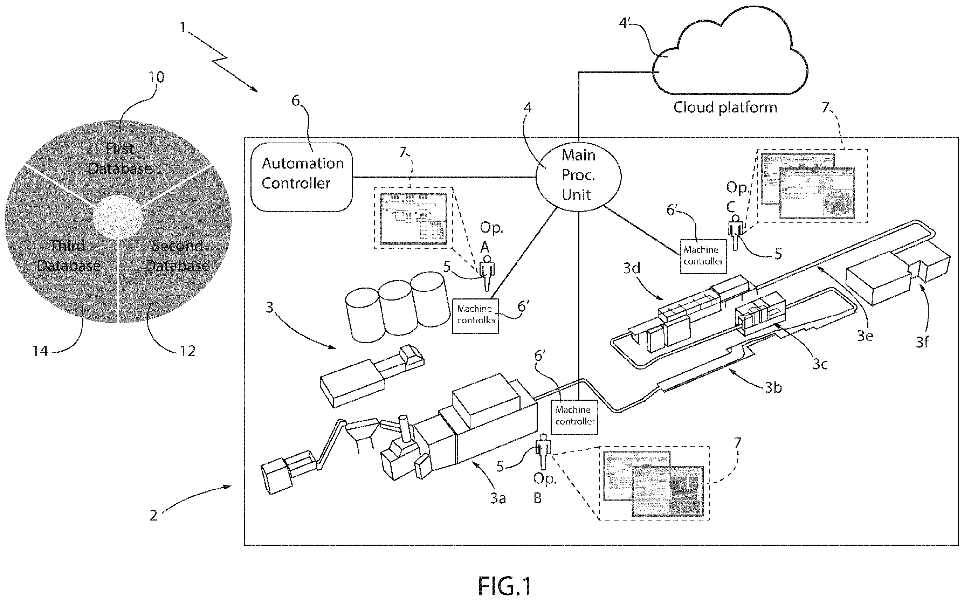

Figure 8 shows schematically an exemplary operation of the sampling control module 14, with possible input data and the output data, in the case of assessment of a risk event. It is noted in particular the increase of the Power value (in the example from 95% to 97%) and the recalculation of the sample size N (in the example giving an additional group of 50 samples to be analysed, immediately after the event or until the end of the production).

According to a further aspect of the present solution, the sampling control module 14 of the processing unit 12 is further configured to properly manage a sublot, if a defective container is found in the same sublot.

In particular, if the sublot is at risk, the sampling control module 14 is configured to determine an additional test in the same sublot, wherein the additional test has the same hypothesis as the first one and a bigger sample size (e.g. a double sample size). The larger sample size gives a higher Power and more reliable results.

The sampling resulting from the additional test can be made near the defective container found in the first test, both in terms of physical and temporal proximity.

Figure 9 shows schematically an exemplary operation of the sampling control module 14, with possible input data and output data, in the case of a sublot at risk. It is noted in particular the additional test and corresponding additional sampling (in the example with a sample size N of 60 samples, double than the initial sample size of the sublot), that is executed between hours 4 and 6 of production, in the hypothesis that the defective container has been detected at hour 5 of the production.

The advantages of the present solution emerge clearly from the foregoing description.

It is in any case emphasised that the described system enables automated control management of the microbiological quality of the production in the container processing plant.

In particular, the system provides in an automated manner the sample size, i.e. the number of samples to be analysed in order to achieve a desired quality level (expressed by the quality levels AQL and/or RQL), determining appropriate variations of sampling of the containers along the production line, so as to monitor in a more or less frequent manner the quality of the containers.

Advantageously, the present solution allows to obtain a statistical acceptance sampling plan starting from short-term and long-term quality objectives.

Finally, it is clear that modifications and variations may be made to what has been described and illustrated herein, without thereby departing from the scope of the present invention, as defined in the appended claims.

In particular, it is emphasised that the solution described can advantageously be applied irrespective of the type of processing plant or the type of containers being processed (the foregoing description of a possible application being in fact provided purely by way of example) .

Moreover, it is noted that, in a possible alternative embodiment, the sampling control module 14 of the processing unit 12 may be configured to receive at the input the AQL value (as a first quality level) and to calculate and provide at the output the RQL value (as the second quality level).

It is underlined that the processing unit 12 of the automated system 10 could also directly control sampling of the containers along the container processing line 2, e.g. via AGVs or similar automated means, in order to achieve a fully automated control of the sampling process.

The same processing unit 12 could also be integrated into the general control logic of the container processing plant 1, e.g. being integrated within the automation controller 6 of the same container processing plant 1.

**Claims**

**1.** An automated system (10) for quality control management in a plant (1) for processing containers, comprising a processing unit (12) configured to control a sampling of the containers to evaluate production microbiological quality; wherein the processing unit (12) is configured to:

receive input data relating to a quality objective for the container processing plant (1); and

determine, using a statistical logic, an acceptance sampling plan for sampling of the containers aimed to achieve the desired quality objective;

wherein the processing unit (12) comprises a sampling control module (14) configured to determine a sample size (N) for the acceptance sampling plan, corresponding to a number of containers to be sampled and analysed within each group of a plurality of groups of containers, each of said groups being statistically considered either acceptable or rejectable based on its microbiological quality;

wherein the sampling control module (14) is configured to receive at its input a first quality level (RQL) for the acceptance sampling plan, and to provide at its output, in addition to the sample size (N) a second quality level (AQL) for the acceptance sampling plan; wherein the first and second quality levels are associated with a respective one of a false positive error ($\alpha$) and false negative error ($\beta$) probability in the statistical analysis of the groups of containers;

wherein the first quality level is a threshold of unacceptable quality level (RQL - Rejectable Quality Level) corresponding to an unacceptable proportion of defective items in each analysed group of containers, the unacceptable quality level being associated with the false negative error probability ($\beta$) or "Consumer's risk", meaning that if the group was actually accepted, there would be the false negative error probability ($\beta$) that the group should have been rejected, because there would be the false negative error probability ($\beta$) that the actual defectiveness proportion of the group is actually greater than the first quality level (RQL);

and the second quality level is an indication of an acceptable quality level (AQL) corresponding to an acceptable proportion of defective items in each analysed group of containers, the acceptable quality level being associated with the false positive error probability ($\alpha$) or "Producer's risk", meaning that if the group was actually rejected, there would be the false positive error probability ($\alpha$) that the group should have been accepted, because there would be the false positive error probability ($\alpha$) that the actual defectiveness proportion of the group is actually less than the second quality level (AQL);

wherein the sampling-control module (14) is configured to calculate and provide at its output the sample size (N) and the second quality level (AQL) value, based on the following expressions:

$$N= \log{_{((1-RQL))}} \llbracket (1-Power/100 \rrbracket )$$

$$AQL= \llbracket 1-(1-\alpha) \rrbracket \char94 (1/N)$$

where N is the sample size value; AQL is the second quality level value; RQL is the first quality level value; $\alpha$ is the false positive error probability; and Power is given by (1-$\beta$) expressed as a percentage value, $\beta$ being the false negative error probability;

wherein the processing unit (12) is configured to receive further input data relating to a pH of a production recipe and a desired setting for the sampling plan; and wherein the sampling control module (14) is configured to: automatically determine a set of input data values for the first quality level (RQL), the false positive error probability ($\alpha$) and the Power of the test based on the pH value of the production recipe and the desired setting for the sampling plan; and to calculate the output data based on the automatically determined set of input data values.

2. The system according to claim 1, wherein the processing unit (12) is configured to receive further input data relating to a speed of production in the container processing plant (1) and a pH of a production recipe; and wherein the sampling control module (14) is configured to determine the sample size (N) for the acceptance sampling plan, also based on the further input data.

3. The system according to claim 1 or 2, wherein the groups of containers that are statistically considered either acceptable or rejectable are respective production sublots each of which corresponding to a preestablished time length of production; and wherein the processing unit (12) is configured to provide at its output a number of containers to be sampled and analysed per unit time for each sublot, based on the sample size (N) and the time length of the production sublot.

4. The system according to claim 3, wherein the sampling control module (14) is configured to recalculate the determined values for the sample size (N) and the second quality level (AQL) in one or more of the following cases: a last part of the production does not correspond to a production sublot; the production ends before completion of a first production sublot; the production ends before a scheduled duration and a corresponding number of production sublots.

5. The system according to any of the previous claims, wherein the sampling-control module (14) is configured to accept at its input and/or consider for calculation pre-set and fixed values for the $\alpha$, Power and RQL input data values.

6. The system according to claim 5, wherein the pre-set and fixed values are:

$\alpha \approx 0{,}0124; 0{,}0027; 0{,}000063;$
Power = 70%; 80%; 90%; 95%; and
RQL = 0,05; 0,03; 0,01; 0,008.

7. The system according to any of the previous claims, wherein the sampling control module (14) is configured to determine an additional sampling of containers to be analysed within a group of containers in order to evaluate production microbiological quality, in response to identification of a defective container within the same group of containers.

8. A plant (1) for processing containers, comprising the automated system (10) according to any of the preceding claims.

**Patentansprüche**

1. Automatisiertes System (10) zur Steuerung der Qualitätskontrolle in einer Anlage (1) zur Behälterbearbeitung, umfassend eine Bearbeitungseinheit (12), die zum Kontrollieren einer Probenentnahme des Behälters zum Bewerten der mikrobiologischen Produktionsqualität ausgelegt ist; wobei die Bearbeitungseinheit (12) ausgelegt ist zum:

Empfangen von Eingabedaten in Bezug auf ein Qualitätsziel für die Behälterbearbeitungsanlage (1) und Bestimmen, unter Verwendung einer statistischen Logik, eines Annahmeprobenentnahmeplans zur Probenentnahme des Behälters mit dem Ziel, das gewünschte Qualitätsziel zu erreichen;
wobei die Bearbeitungseinheit (12) ein Probenentnahmekontrollmodul (14) umfasst, das zum Bestimmen einer Probengröße (N) für den Annahmeprobenentnahmeplan, die einer Anzahl von Behältern, von denen innerhalb jeder Gruppe einer Vielzahl von Gruppen von Behältern Proben entnommen und analysiert werden sollen, entspricht, ausgelegt ist, wobei jede der Gruppen basierend auf ihrer mikrobiologischen Qualität statistisch als entweder annehmbar oder zurückzuweisen betrachtet wird;
wobei das Probenentnahmekontrollmodul (14) zum Empfangen, an seinem Eingang, eines ersten Qualitätsniveaus (RQL) für den Annahmeprobenentnahmeplan, und zum Bereitstellen, an seinem Ausgang, zusätzlich zur Probengröße (N), eines zweiten Qualitätsniveaus (AQL) für den Annahmeprobenentnahmeplan ausgelegt ist; wobei das erste und das zweite Qualitätsniveau einem jeweiligen von einer Wahrscheinlichkeit eines falsch positiven Fehlers ($\alpha$) und eines falsch negativen Fehlers ($\beta$) in der statistischen Analyse der Gruppen von Behältern zugeordnet sind;
wobei das erste Qualitätsniveau eine Schwelle eines inakzeptablen Qualitätsniveaus (RQL - zurückzuweisendes Qualitätsniveau) ist, das einem inakzeptablen Anteil von fehlerhaften Artikeln in jeder analysierten Gruppe von Behältern entspricht, wobei das inakzeptable Qualitätsniveau der Wahrscheinlichkeit eines falsch negativen Fehlers ($\beta$) oder einem "Verbraucherrisiko" zugeordnet ist, was bedeutet, dass, wenn die Gruppe tatsächlich angenommen wurde, die Wahrscheinlichkeit eines falsch negativen Fehlers ($\beta$) bestünde, dass die Gruppe hätte zurückgewiesen werden sollen, weil die Wahrscheinlichkeit eines falsch negativen Fehlers ($\beta$) bestünde, dass der tatsächliche Fehlerhaftigkeitsanteil der Gruppe tatsächlich größer als das erste Qualitätsniveau (RQL) ist;
und das zweite Qualitätsniveau eine Angabe eines annehmbaren Qualitätsniveaus (AQL) ist, das einem annehmbaren Anteil von fehlerhaften Artikeln in jeder analysierten Gruppe von Behältern entspricht, wobei das annehmbare Qualitätsniveau der Wahrscheinlichkeit eines falsch positiven Fehlers ($\alpha$) oder einem "Herstellerrisiko" zugeordnet ist, was bedeutet, dass, wenn die Gruppe tatsächlich zurückgewiesen wurde, die Wahrscheinlichkeit eines falsch positiven Fehlers ($\alpha$) bestünde, dass die Gruppe hätte angenommen werden sollen, weil die Wahrscheinlichkeit eines falsch positiven Fehlers ($\alpha$) bestünde, dass der tatsächliche Fehlerhaftigkeitsanteil der Gruppe tatsächlich niedriger als das zweite Qualitätsniveau (AQL) ist;
wobei das Probenentnahmekontrollmodul (14) zum Berechnen und Bereitstellen, an seinem Ausgang, des Werts der Probengröße (N) und des zweiten Qualitätsniveaus (AQL) basierend auf den folgenden Ausdrücken

ausgelegt ist:

$$N= \log_{((1-RQL))} [(1-Power/100]\ )$$

$$AQL= [1-(1-\alpha)] \ ^\wedge\ 1/N)$$

wobei N der Probengrößenwert ist; AQL der Wert des zweiten Qualitätsniveaus ist; RQL der Wert des ersten Qualitätsniveaus ist; $\alpha$ die Wahrscheinlichkeit eines falsch positiven Fehlers ist und Power durch (1-$\beta$), ausgedrückt als ein Prozentwert, gegeben ist, wobei $\beta$ die Wahrscheinlichkeit eines falsch negativen Fehlers ist; wobei die Bearbeitungseinheit (12) zum Empfangen weiterer Eingabedaten in Bezug auf einen pH-Wert eines Produktionsrezepts und einer gewünschten Einstellung für den Probenentnahmeplan ausgelegt ist und wobei das Probenentnahmekontrollmodul (14) ausgelegt ist zum: automatischen Bestimmen eines Satzes von Eingabedatenwerten für das erste Qualitätsniveau (RQL), die Wahrscheinlichkeit eines falsch positiven Fehlers ($\alpha$) und die Leistung des Tests basierend auf dem pH-Wert des Produktionsrezepts und der gewünschten Einstellung für den Probenentnahmeplan und zum Berechnen der Ausgabedaten basierend auf dem automatisch bestimmten Satz von Eingabedatenwerten.

2. System nach Anspruch 1, wobei die Bearbeitungseinheit (12) zum Empfangen weiterer Eingabedaten in Bezug auf eine Produktionsgeschwindigkeit in der Behälterbearbeitungsanlage (1) und einen pH-Wert eines Produktionsrezepts ausgelegt ist und wobei das Probenentnahmekontrollmodul (14) zum Bestimmen der Probengröße (N) für den Annahmeprobenentnahmeplan, ebenfalls basierend auf den weiteren Eingabedaten, ausgelegt ist.

3. System nach Anspruch 1 oder 2, wobei die Gruppen von Behältern, die statistisch als entweder annehmbar oder zurückzuweisen betrachtet werden, jeweilige Produktionsteillose sind, von denen jedes einer vorab festgelegten Produktionszeitlänge entspricht; und wobei die Bearbeitungseinheit (12) zum Bereitstellen, an ihrem Ausgang, einer Anzahl von Behältern, von denen pro Zeiteinheit für jedes Teillos Proben entnommen und analysiert werden sollen, basierend auf der Probengröße (N) und der Zeitlänge des Produktionsteilloses, ausgelegt ist.

4. System nach Anspruch 3, wobei das Probenentnahmekontrollmodul (14) zum Neuberechnen der bestimmten Werte für die Probengröße (N) und das zweite Qualitätsniveau (AQL) in einem oder mehreren der folgenden Fälle ausgelegt ist: ein letzter Teil der Produktion entspricht nicht einem Produktionsteillos; die Produktion endet vor dem Abschluss eines ersten Produktionsteilloses; die Produktion endet vor einer geplanten Dauer und einer entsprechenden Anzahl von Produktionsteillosen.

5. System nach einem der vorstehenden Ansprüche, wobei das Probenentnahmekontrollmodul (14) zum Annehmen, an seinem Eingang, und/oder Berücksichtigen zur Berechnung voreingestellter und fester Werte für die Eingabedatenwerte von $\alpha$, Power und RQL ausgelegt ist.

6. System nach Anspruch 5, wobei die voreingestellten und festen Werte sind:

$\alpha \approx$ 0,0124; 0,0027; 0,000063;
Power = 70 %; 80 %; 90 %; 95 % und
RQL = 0,05; 0,03; 0,01; 0,008.

7. System nach einem der vorstehenden Ansprüche, wobei das Probenentnahmekontrollmodul (14) zum Bestimmen einer zusätzlichen Probenentnahme von Behältern, die innerhalb einer Gruppe von Behältern analysiert werden sollen, um die mikrobiologische Produktionsqualität zu bewerten, als Reaktion auf die Identifikation eines fehlerhaften Behälters innerhalb der gleichen Gruppe von Behältern ausgelegt ist.

8. Anlage (1) zum Bearbeiten von Behältern, umfassend das automatisierte System (10) nach einem der vorstehenden Ansprüche.

**Revendications**

1. Système automatisé (10) de gestion de contrôle qualité dans une installation (1) de traitement de récipients, comprenant une unité de traitement (12) configurée pour commander un échantillonnage des récipients pour évaluer une qualité microbiologique de production ; dans lequel l'unité de traitement (12) est configurée pour :

recevoir des données d'entrée relatives à un objectif de qualité pour l'installation de traitement de récipients (1) ; et

déterminer, à l'aide d'une logique statistique, un plan d'échantillonnage d'acceptation pour l'échantillonnage des récipients dans le but d'atteindre l'objectif de qualité souhaité ;

dans lequel l'unité de traitement (12) comprend un module de commande d'échantillonnage (14) configuré pour déterminer une taille d'échantillon (N) pour le plan d'échantillonnage d'acceptation, correspondant à un nombre de récipients à échantillonner et analyser dans chaque groupe d'une pluralité de groupes de récipients, chacun desdits groupes étant considéré statistiquement soit comme étant acceptable, soit comme étant à rejeter en fonction de sa qualité microbiologique ;

dans lequel le module de commande d'échantillonnage (14) est configuré pour recevoir à son entrée un premier niveau de qualité (RQL) pour le plan d'échantillonnage d'acceptation, et pour fournir à sa sortie, outre la taille d'échantillon (N), un deuxième niveau de qualité (AQL) pour le plan d'échantillonnage d'acceptation ; dans lequel les premier et deuxième niveaux de qualité sont associés à une probabilité respective parmi une probabilité d'erreur due aux faux positifs ($\alpha$) et une probabilité d'erreur due aux faux négatifs ($\beta$) dans l'analyse statistique des groupes de récipients ;

dans lequel le premier niveau de qualité est un seuil de niveau de qualité inacceptable (RQL - niveau de qualité à rejeter) correspondant à une proportion inacceptable d'éléments défectueux dans chaque groupe de récipients analysé, le niveau de qualité inacceptable étant associé à la probabilité d'erreur due aux faux négatifs ($\beta$) ou « risque pour le client », qui signifie que si le groupe était effectivement accepté, il y aurait la probabilité d'erreur due aux faux négatifs ($\beta$) que le groupe aurait dû être rejeté, car il y aurait la probabilité d'erreur due aux faux négatifs ($\beta$) que la proportion défectueuse réelle du groupe soit en réalité supérieure au premier niveau de qualité (RQL) ;

et le deuxième niveau de qualité est une indication d'un niveau de qualité acceptable (AQL) correspondant à une proportion acceptable d'éléments défectueux dans chaque groupe de récipients analysé, le niveau de qualité acceptable étant associé à la probabilité d'erreur due aux faux positifs ($\alpha$) ou « risque pour le producteur », qui signifie que si le groupe était effectivement rejeté, il y aurait la probabilité d'erreur due aux faux positifs ($\alpha$) que le groupe aurait dû être accepté, car il y aurait la probabilité d'erreur due aux faux positifs ($\alpha$) que la proportion défectueuse réelle du groupe soit en réalité inférieure au deuxième niveau de qualité (AQL) ;

dans lequel le module de commande d'échantillonnage (14) est configuré pour calculer et fournir à sa sortie la taille d'échantillon (N) et la valeur du deuxième niveau de qualité (AQL), selon les expressions suivantes :

$$N = \log\_((1-RQL) \qquad [(1-\text{Puissance}/100])$$

$$AQL = [1-(1-\alpha)]^{(1/N)}$$

où N est la valeur de taille d'échantillon ; AQL est la valeur du deuxième niveau de qualité ; RQL est la valeur du premier niveau de qualité ; $\alpha$ est la probabilité d'erreur due aux faux positifs ; et Puissance est donnée par (1-$\beta$) exprimé sous forme de valeur en pourcentage, $\beta$ étant la probabilité d'erreur due aux faux négatifs ;

dans lequel l'unité de traitement (12) est configurée pour recevoir d'autres données d'entrée relatives à un pH d'une recette de production et un paramètre souhaité pour le plan d'échantillonnage ; et dans lequel le module de commande d'échantillonnage (14) est configuré pour : déterminer automatiquement un ensemble de valeurs de données d'entrée pour le premier niveau de qualité (RQL), la probabilité d'erreur due aux faux positifs ($\alpha$) et la Puissance du test en fonction de la valeur de pH de la recette de production et du paramètre souhaité pour le plan d'échantillonnage ; et pour calculer les données de sortie en fonction de l'ensemble de valeurs de données d'entrée déterminé automatiquement.

2. Système selon la revendication 1, dans lequel l'unité de traitement (12) est configurée pour recevoir d'autres données d'entrée relatives à une vitesse de production dans l'installation de traitement de récipients (1) et à un pH d'une recette de production ; et dans lequel le module de commande d'échantillonnage (14) est configuré pour déterminer la taille d'échantillon (N) pour le plan d'échantillonnage d'acceptation, également en fonction des autres données d'entrée.

3. Système selon la revendication 1 ou 2, dans lequel les groupes de récipients qui sont considérés statistiquement soit comme étant acceptables, soit comme étant à rejeter sont des sous-lots de production respectifs, chacun d'eux correspondant à une longueur de temps de production préétablie ; et dans lequel l'unité de traitement (12) est configurée pour fournir à sa sortie un nombre de récipients à échantillonner et analyser par unité de temps pour chaque sous-lot, en fonction de la taille d'échantillon (N) et de la longueur de temps du sous-lot de production.

4. Système selon la revendication 3, dans lequel le module de commande d'échantillonnage (14) est configuré pour recalculer les valeurs déterminées pour la taille d'échantillon (N) et le deuxième niveau de qualité (AQL) dans un ou plusieurs des cas suivants : une dernière partie de la production ne correspond pas à un sous-lot de production ; la production se termine avant la terminaison d'un premier sous-lot de production ; la production se termine avant une durée programmée et un nombre correspondant de sous-lots de production.

5. Système selon l'une quelconque des revendications précédentes, dans lequel le module de commande d'échantillonnage (14) est configuré pour accepter à son entrée et/ou prendre pour le calcul des valeurs prédéfinies et fixes pour les valeurs de données d'entrée α, Puissance et RQL.

6. Système selon la revendication 5, dans lequel les valeurs prédéfinies et fixes sont :

$\alpha \approx 0,0124$ ; 0,0027 ; 0,000063 ;
Puissance = 70 % ; 80 % ; 90 % ; 95 % ; et
RQL = 0,05 ; 0,03 ; 0,01 ; 0,008.

7. Système selon l'une quelconque des revendications précédentes, dans lequel le module de commande d'échantillonnage (14) est configuré pour déterminer un échantillonnage supplémentaire de récipients à analyser dans un groupe de récipients afin d'évaluer une qualité microbiologique de production, en réponse à l'identification d'un récipient défectueux dans le même groupe de récipients.

8. Installation (1) de traitement de récipients, comprenant le système automatisé (10) selon l'une quelconque des revendications précédentes.

FIG.1

FIG.2

FIG.3A

FIG.3B

FIG.4

SET OF DATA:
α=3σ, power=80%
RQL=1/100

. ADVANCED SAMPLING
. LOW PRODUCT
. LENGTH OF
  PRODUCTION=30HOURS
. SPEED=18000 bph

N=150, AQL=1,8 . 10^-5

SUBLOT=10HOURS

. PRODUCTION=540000 BOTTLES
. 30HOURS/10HOURS=3 SUBLOTS
. 18000bph . 10h=180000 BOTTLES
  IN EACH SUBLOT

OUTPUT:
. SELECT N/10=150/10=15 bph
. 3 SUBLOTS (180000 BOTTLES, 10
  HOURS EACH)
. AQL=1,8 . 10^-5

FIG.5

INPUT 1:
. pH: LOW ACID
. LENGTH OF
  PRODUCTION=30HOURS
. SPEED=18000 bph

INPUT 2:
. α=3σ,
. power=80%
. RQL=1/100

SUBLOT=10HOURS

N=150, AQL=1,8 . 10^-5

. PRODUCTION=540000 BOTTLES
. 30HOURS/10HOURS=3 SUBLOTS
. 18000bph . 10h=180000 BOTTLES
  IN EACH SUBLOT

OUTPUT:
. SELECT N/10=150/10=15 bph
. 3 SUBLOTS (180000 BOTTLES, 10
  HOURS EACH)
. AQL=1,8 . 10^-5

FIG.6

| | | PROBABILITY | | |
|---|---|---|---|---|
| | | Low (1) | Medium (2) | High (3) |
| SEVERITY | Low (1) | 1 (LOW) | 2 (LOW) | 3 (LOW) |
| | Medium (2) | 2 (LOW) | 4 (HIGH) | 6 (HIGH) |
| | High (3) | 3 (LOW) | 6 (HIGH) | 9 (HIGH) |

FIG.7

FIG.8

FIG.9

FIG.1

First Database 10

Third Database 14

Second Database 12

1

Automation Controller 6

Main Proc. Unit 4

Cloud platform 4'

Op. A 5

Op. B 5

Op. C 5

Machine controller 6'

Machine controller 6'

Machine controller 6'

Machine controller 6'

3

3a

3b

3c

3d

3e

3f

7

2

EP 4 006 669 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020126441 A

- US 2019318027 A